# EUROPEAN PATENT APPLICATION

(11) **EP 1 349 076 A1**
(43) Date of publication of application: **01.10.2003**
(21) Application number: 01900626.1
(22) Date of filing: 05.01.2001
(51) Int. Cl.: G06F 12/00, G06F 3/06

(54) **METHOD FOR REGENERATING PARTITION USING VIRTUAL DRIVE, DATA PROCESSOR AND DATA STORAGE DEVICE**

(71) Applicant: Media Vision Incorporated, Chiyoda-ku, Tokyo 102-0073 (JP); Amberson Corporation, Hong Kong Special Administrative Region (CN)
(72) Inventor: LIREN, Ji ShangHai YuGang Scie. Techn.Dev.Co.Ltd., Jin Xuan Mansion Shanghai (CN)
(74) Representative: Leson, Thomas Johannes Alois, Dipl.-Ing.
(86) International application number: JP0100023
(87) International publication number: WO02056179

(57) **Abstract**

It is necessary for changing constitution of a partition to carry out new technical development for directly operating an operating system in order to analyze information associated with the interior of an operating system developed by other companies to solve a problem known as a result thereof.

A method for reproducing a partition using a virtual drive, a data processing apparatus and a data storage device, wherein in an operating system for carrying out divisional control with a partition based on physical sectors in an external storage device as a unit, a virtual drive being prepared by the steps of: changing the partition to a suitable size; preparing the partition after changed as a new partition by the standard procedure provided in advance in the operating system; deciding a new physical position of all data of the partition on the basis of preparing information of the new partition; obtaining position information of a physical sector to be replaced on the basis of the new physical position to produce different information between original position information and new position information; reproducing the partition on the basis of the produced different information; and sequentially recording and renewing progress points of the reproducing processing, characterized by carrying out reproduction of the partition while maintaining the contents of the partition without relying on the internal construction of a file system.

## Description

### TECHNICAL FIELD

The present invention relates to a method and apparatus for reproducing a partition, as a new partition, using a virtual drive formed at a new position on a disk, while maintaining contents in order to change a partition already secured on the disk device of a computer being operated.

### BACKGROUND ART

Generally, controlling of a hard disk for storing information such as data base is carried out by an operating system. In an application program using the hard disk, in case where an access to a specific hard disk is imbalanced, the performance expected by the system is not fully displayed. For overcoming the imbalance, it is necessary to change the partition constitution of the hard disk used by an application program. In changing the partition constitution of the hard disk, after changing the partition constitution of the hard disk used, the data base is reconstructed, and further registration of the system constitution need be changed.

As described above, in the conventional measures, it is indispensable to obtain Knowledge about mounting of a file system within the partition that not normally provided by the operating system. That is, it is necessary to make technical development in which files themselves are newly analyzed every file system separately from the operating system with respect to the external storage device originally controlled by the operating system, and the files are directly operated.

Further, in the operating conception of a general computer and a conventional software operated thereon, internal information of a partition is directly obtained, and is edited and changed. In Japanese Patent Publication No. 512379/1998 as prior art which is similar to the present invention, paying attention to the construction of a partition and a file system, vacant regions are secured, along the internal construction thereof, to rewrite partition information whereby changing of sizes and other processes are carried out. That is, inspection, change of sizes and the like are problems in design which are requested inevitably in mounting, which depend on the specific file system, and further depend on arrangement of data on the file system.

### DISCLOSURE OF INVENTION

As has been mentioned above, there involves following problems for changing the partition construction of the hard disk. For changing the partition construction, it is necessary to make new technical development for directly operating the operating system in order to analyze information related to the interior of the operating system developed by other companies and to solve the problem resulting therefrom. Further, even the file system provided by one and the same operating system, at the time of renewing the operating system, it is necessary to newly make new technical development as a separate one.

Further, since the function caused by the new development itself is theoretically different in mounting from the operating system, there is a possibility of bringing forth important non-compatibility.

As described above, in the conventional system, new development is necessary with respect to each of file systems given. And, duplication of these developing operations poses not only a problem of compatibility but also an important problem also in terms of resources and costs.

From the foregoing, it is an object of the present invention to provide a method for reproducing a partition, which on the basis of the standard operating system function, irrespective of analysis of information associated with the interior of the operating system developed by other companies, reprepares an existing partition while maintaining the contents and at a new position on the disk and with new size and characteristic.

For achieving the above-described object, the present invention provides an operating system for carrying out divisional control with a partition based on physical sectors in an external storage device as a unit, comprising the steps of: changing said partition to a suitable size; preparing the partition after changed as a new partition by the standard procedure provided in advance in the operating system; deciding a new physical position of all data of the partition on the basis of preparing information of the new partition; and obtaining position information of a physical sector to be replaced on the basis of the new physical position to produce different information between original position information and new position information.

Further, a virtual drive is prepared by the steps of: reproducing the partition on the basis of the produced different information; and sequentially recording and renewing progress points of the reproducing processing, whereby the partition is reproduced while maintaining the contents of the partition without relying on the internal construction of a file system.

The virtual drive is constituted including a target drive and a mirror drive, and on the target drive are recorded the position and the size after changed from the position of the physical sector of the external storage device. And, on the mirror drive is recorded the construction of the partition which is the subject of the reproduction.

The change can be set freely irrespective of the contents of the partition by preparing the size of the partition in the virtual drive.

The step for deciding a physical position of a partition comprises recording data of disk access by the operating system at the time of file access, and directly connecting a file and a sector which is a physical constituent element thereof to decide its physical position. The deciding of the physical position is carried out by a file locator while obtaining information of a position of the physical sector which is a minimum unit of a file from information of the operating system.

The file locator obtains an address produced by the operating system by standard interruption of high level and low level to the operating system, which is compared with an address of an original sector to decide a position of a new sector.

The file locator is constituted including a virtual device driver, and the virtual device driver stores write information of low level obtained by the file locator.

The virtual drive means is a virtual drive for producing the same data construction as the corresponding external storage device on the memory region to hold it, and selecting processes such as read and write to change operation.

Erasing of the virtual drive prepared can be carried out separately as a processing independent of the file system.

The virtual partition produced in the virtual drive is initialized without affecting on the corresponding actual data. Further, production of the different information by way of the position information is produced from a corresponding relation between position information of a series of physical sectors to be replaced on the external storage device, an original position and position information of moved destination.

The record of said corresponding relation is a corresponding table of the original position and position information after reproduced with respect to all sectors corresponding to each other recorded in the mirror drive and the target drive by the file locator. And, all files and sectors recorded on the partition are replaced in the conditions in which they are recorded in the virtual drive using the corresponding table to rearrange the sectors.

Further, the sequential recording and renewal of progress points in the processing are that entries of the processed index are recorded and renewed in a file one by one or in a fixed period.

There is provided a data processing apparatus having an operating system provided with a device for controlling access and change with respect to information stored in an external storage device of a computer system and for carrying out divisional control with a partition based on a physical sector as a unit in the external storage device is a processing device in which reproduction of the partition is carried out by the virtual drive means while maintaining the contents of said partition without relying on the internal construction of a file system.

The device includes means for changing the partition to a suitable size; means for preparing the partition after changed as a new partition by the standard procedure provided in advance in the operating system; means for deciding new physical positions of all data of the partition on the basis of preparation information of the new partition; means for producing different information between original position information and new position information while obtaining positioning formation of the physical sector to be replaced on the basis of the new physical position; and means for sequentially recording and renewing progress points of the reproduction processing.

Whereby there provides a data processing apparatus constituted so as to have virtual drive means maintaining the contents of the partition and produced by the new partition.

There is provided a device for controlling access and change with respect to information stored in an external storage device of a computer system, wherein the means for deciding a physical position of the partition records data of a disk access by the operating system at the time of file access, and directly connects a file and a sector which is a physical constituent element thereof to decide a physical position thereof.

The virtual drive means is a virtual drive for producing the same data construction as the corresponding external storage device on the memory region to hold it, and selecting processes such as read and write to change operation.

Further, there is provided a storage apparatus having an operating system provided with a device for controlling access and change with respect to information stored in an external storage device of a computer system and for carrying out divisional control with a partition based on a physical sector as a unit in the external storage device, comprising: means for changing the partition to a suitable size; and means for preparing the partition after changed as a new partition by the standard procedure provided in advance in the operating system;

Further, there is provided a data storage device constituted from means for deciding new physical positions of all data of the partition on the basis of preparation information of the new partition; means for producing different information between original position information and new position information while obtaining positioning formation of the physical sector to be replaced on the basis of the new physical position; means for reproducing the partition on the basis of the produced different information; and means for sequentially recording and renewing progress points of the reproduction processing, whereby having stored reproducing means of a partition using a virtual drive for carrying out reproduction of a new partition while maintaining the contents of the partition not relying on the internal construction of a file system.

And, the means for deciding a physical position of said partition records data of a disk access by the operating system at the time of file access, and directly connects a file and a sector which is a physical constituent element thereof to decide a physical position thereof, and the virtual drive means of the device stores a virtual drive means for producing the same data construction as the corresponding external storage device on the memory region to hold it, and selecting processes such as read and write to change operation.

### BRIEF DESCRIPTION OF DRAWINGS

FIG. 1 is a view showing basic elements constituting a computer according to the present invention.
FIG. 2 shows one example of a drive constitution on a hard disk according to the present invention.
FIG. 3 is a view showing a relation of a virtual device with a driver according to the present invention.
FIG. 4 shows a flow of a normal processing not using the virtual drive according to the present invention.
FIG. 5 shows a flow at the time of write in the virtual drive according to the present invention.
FIG. 6 shows a flow of processing at the time of read in the virtual drive according to the present invention.
FIG. 7 is a view showing a file for explaining the conditions of write and read according to the present invention.
FIG. 8 is a view showing the conditions of a copy of the drive according to the present invention.
FIG. 9 shows an example of a corresponding table of positional information according to the present invention.
FIG. 10 is a view for explaining the conditions of a file copy according to the present invention.
FIG. 11 is a view showing replacement of a sector on a partition according to the present invention.

### BEST MODE FOR CARRYING OUT THE INVENTION

The embodiments of production of a partition, and preparation and deletion of a file according to the virtual drive technique of the present invention will be explained in detail hereinafter with reference to the accompanying drawings.

In the present invention, partition information corresponding to a partition after reproduction is prepared by a standard procedure of an operating system. A position of "after movement" of all data on the partition is decided on the basis of the information, and all information are rearranged as the results show to change an actual partition size.

Further, the present invention also uses the technique wherein in accessing a file, data accessed to the disk by an operating system (OS) is recorded, and a file and a sector as a physical element thereof are connected directly to thereby decide a physical arrangement on the disk without replying on the file system.

The aforementioned two principal techniques use a function provided in standard by the operating system, and are not concerned with the partition construction per se constituted by the standard operating system. Accordingly, the present invention can be carried out without relying on the specific file system.

Now, the computer used in the present invention will be explained.

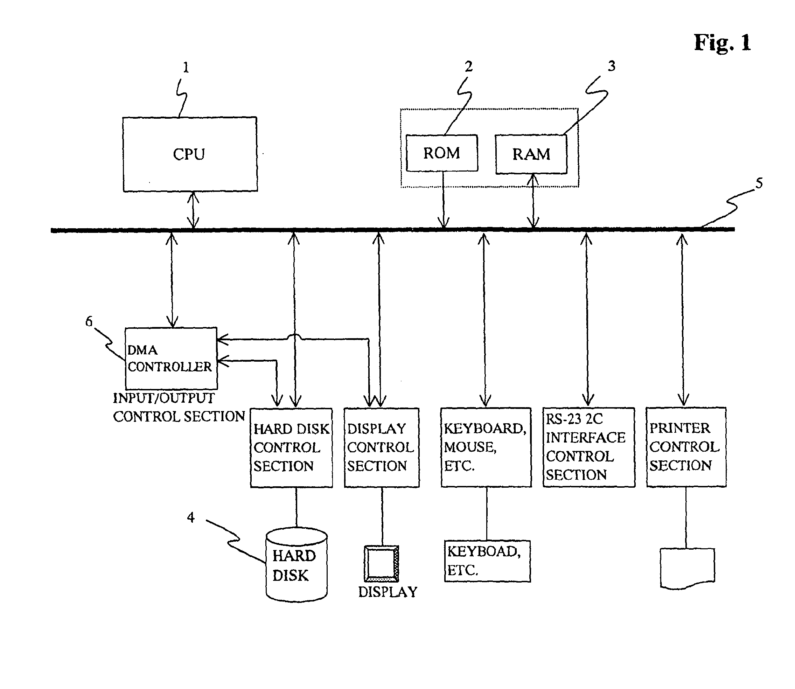

At present, the computers are being used widely, quantities of data handled of which are enormous. Therefore, the quantities of data stored are also enormous, and effective application has been requested. FIG. 1 is a view showing basic elements constituting a computer.

As shown in FIG. 1, the basic constitution of the computer comprises a processor section 1, memory sections 2, 3, an input/output control section 6, input/output apparatuses, and input/output interfaces. Devices of the processor section 1, the memory section, the input/output control section and the like are connected by a bus 5, and connection and new establishment of the memories 2, 3, various input/output control sections can be made easily.

For the processor, a microprocessor is used. For use of general businesses, microprocessors of 16-bit or 32-bit or more which are high in processing speed.

For the memories, there are prepared two kinds, one being a read only memory 2 (hereinafter referred to as ROM), and the other being a random access memory 3 (hereinafter referred to as RAM). A monitor for controlling the whole computer and the like are enclosed in ROM 2. A program input from an auxiliary storage device or the like, data and intermediate results of a program being executed are enclosed in RAM 3. The storage capacity of a memory is generally about 64 MB.

The input/output control section 6 controls the transfer of data between the memory sections 2, 3 and the input/output apparatuses or between the input/output interfaces on the basis of instructions from the processor. These control sections are in the form of LSI, which includes a direct memory access system (DMA) for transferring data independently of the operation of the processor, and a program control system for transferring data by byte by byte or word by word by controlling a program on the processor. In a hard disk control section, a flexible disk control section and a display control section, since high speed data transfer is necessary, and so the direct memory access system (DMA) is employed, and in a printer control section, a keyboard control section, an RS-232C control section or the like, a program control system is employed. The auxiliary storage device as the input/output apparatus is provided to accumulate data and programs, for which are prepared various devices such as a hard disk 4, a flexible disk, CD-ROM or the like. Particularly, the hard disk 4 has a large storage capacity, and has a short access time, which is therefore used generally in a computer for business. For the input devices, a keyboard and various pointing devices are used. Other display devices and printers are prepared. Further, as the input/output interface, a communication interface, and a user apparatus connecting interface are prepared.

In order to function the thus constituted computer, an operating system has been developed and mounted. As the typical operating system, MS-DOS of Microsoft Inc. is well known. Its function includes various monitors, a file control, a flexible disk control, and exchanges of various programs and data, and further, a multi-task function, a multi-window function and the like are provided. Recently, operating systems directed at real time processing have been developed and provided more and more.

As a general purpose operating system, various operating systems have been developed, but since these operating systems have their own interface, there is a problem in terms of productivity and circulation of a software not only for a user but also for an operating system provider.

In the operating system, there are provided some kinds of devices handled by the file control and methods, i.e. organization of arrangement of records on the recording medium according to use of files. A user is able to select one out of them according to the using purpose to use it. The typical file organization includes sequential organization, direct organization, index organization, classification organization and virtual storage organization. The virtual storage organization handled in the present invention is file organization having a conception called a control interval (CI) incorporated therein so that a user may process without being aware of attribute of a recording medium directly with respect to a direct access device. The virtual storage organization includes three kinds, i.e. an entry sequence data set (ESDS) for storing in order that a record is written, a relative record data set so that a record may be accessed by a relative number, and a key sequence data set (KSDS) for storing records in order of key and capable of accessing by a key adjusting to index. In the control interval (hereinafter referred to as CI), control information performs control of length and vacancy of records according to the kinds of data sets with fixed length in a single file.

And, the user may be conscious of only CI, and a relation between CI and the recording medium is totally controlled by the file control. Further, the continuous CI is controlled in unit called a control area (hereinafter referred to as CA). Further, considering that CI is continuously linked, a position of each record can be represented by a relative byte address (RBA) from the head of a file. In the data entry set, the length of a record can be varied, but in the relative record data set, the length of a record should be fixed, and there may be a construction that a vacant record may present. The key sequence data set constitutes CI for a single index merely by the control interval (CI) for data, to which corresponds a single CI for index called a sequence set. There is constituted that these sequence sets are controlled by CI for a further upper index. Therefore, in the event that a record fails to enter CI for data by insertion of a record, inserting process is carried out after the half of a record in CI for data has been moved to vacant CI. This is called a division of CI. Further, in case where vacant CI is not present within CA when CI is tried to be divided, similar dividing is carried out.

With respect to the operation for transferring a record between a file and a main memory, methods for carrying out such a transfer easily by a user include a sequential access method, a direct access method, an index sequential access method, a classification access method, and a virtual access method.

These access methods are constituted so that processing may be made substantially corresponding to the organization file of a record described above. Among them, the virtual storage access method (VSAM) handled in the present invention is an access method with respect to a file of a virtual storage organization, in which accessing by designation of the entry sequential and relative byte address (RBA) can be employed with respect to the entry sequential data set. Accessing by designation of relative record number and in order of relative record number can be employed with respect to the relative record data set. Accessing by designation of key, in order of key, and designation of relative byte address (RBA) can be employed with respect to the key sequential data set.

The typical one of the external storage device handled in the present invention is called "Hard Disk Drive", which includes a device in which in principle, a change in magnetic field is produced in a magnetized metal plate (or a substitute) by a magnetic head for recording and reproduction.

All those that provide the similar function having characteristics mentioned below are included.

The "Hard Disk Drive" is divided into physical units called "Sector" in which a series of units that can be recorded and distinguished is collected.

Further, the computer having "Hard Disk" connected thereto is made in the form of abstract by a software mechanism called "Operating System" (OS) to enable controlling internal and external devices while concealing details of physically actually presence. Therefore, a developer or a user is able to allow the software to carry out processing in a consistent procedure on the operating system without relying upon a difference in physical constitution every computer which is operated actually even when the software is operated.

In the modern operating system, the association with a sector that is recorded and controlled actually by the external storage device with an information control unit as a unit made in the form of abstract called "File" is managed by the operating system. Further, this construction made in the form of abstract in order to control a file is generally called "File System".

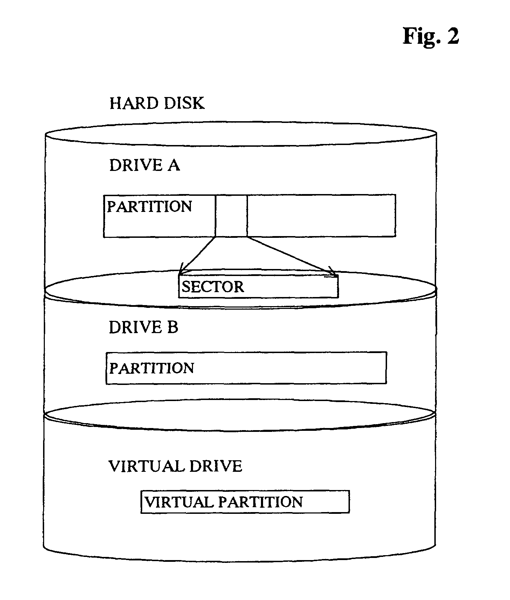

Here, FIG. 2 shows an example of the drive constitution on the hard disk according to the present invention. As shown in FIG. 2, since the sector so far defined is basically a minimum unit for getting information in and out, the file system introduces, with respect to the hard disk drive including very many sectors, a unit called a partition comprised of a further number of sectors, whereby effective control may be carried out.

The partition operation using a virtual drive according to the present invention will now be explained.

In the following explanation, the course of reproduction of a partition using a virtual drive realized by the present invention will be represented by terms of "Resize of partition" and "Resize". Further, in the following, a description will be made on the basis of the aforementioned operating system as one mounting example.

With respect to the disk including a partition which is the subject of the resize, a virtual drive called a target for realizing the disk after the resize is prepared. After this, there actually occurs an access only in the partition which is the subject of the resize. Therefore, operation relative to the partition of the subject is virtualized to prepare and use a virtual drive "Mirror", but in the following explanation of the present invention, since it is regarded that the partition construction which is the subject of the resize is contained in the "Mirror" without modification, complicated details in mounting are omitted and only the subject of the resize is mentioned, thus not mentioning the mirror.

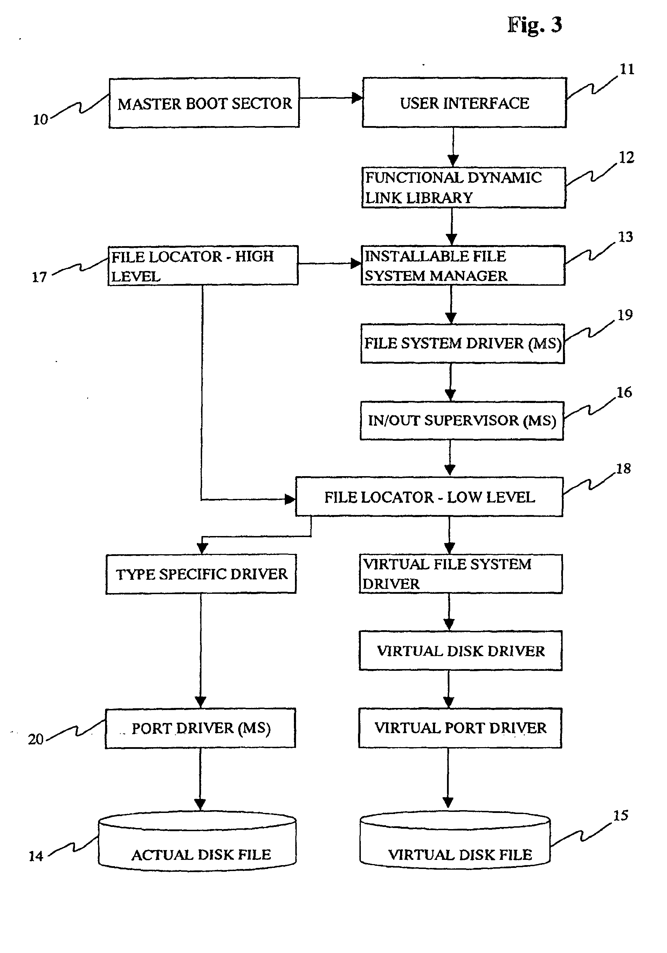

Here, the Windows operating system of Microsoft Inc. will be explained as an example with reference to FIG. 3.

FIG. 3 is a view showing a relation of a virtual device with a driver. "Master boot sector" 10, "User interface" 11, "Functional, dynamic link library" 12 and the like shown in the drawing are operated on the computer system designed and manufactured in accordance with the use of an IBM-PC compatible machine. These terms are based on terms of Microsoft Inc. for describing the operation when the Windows operating system manufactured by Microsoft Inc., and in other system constitutions/operating systems, can be replaced with equivalent substitutes. In the drawing, a portion of (MS) is a constituent element of the Windows. Further, arrows indicate a flow of processing. "Actual disk file2 14 in the lowest stage represents a realistic external storage device, and "Virtual disk file" 15 represents a file constituting a virtual drive including a target drive and a mirror drive according to the present invention.

"Installable file system manager" 13 processes a normal high level file access, and "I/O supervisor" 16 processes a low level file access. (Actually, "Type specific driver2 and "Port driver" relying upon the hardware are requested for processing.)

For monitoring In and Out of information/instructions, it is put between two software components ("File locators 17, 18") of high level/ low level, and respective information ("In" is access to file, and "Out" is access to sector) are compared whereby "File in the form of abstract" and "Sector which is an actual data storage place" are connected to enable realization of the function of deciding a sector position mentioned previously.

In the following, the present invention will be explained in detail.

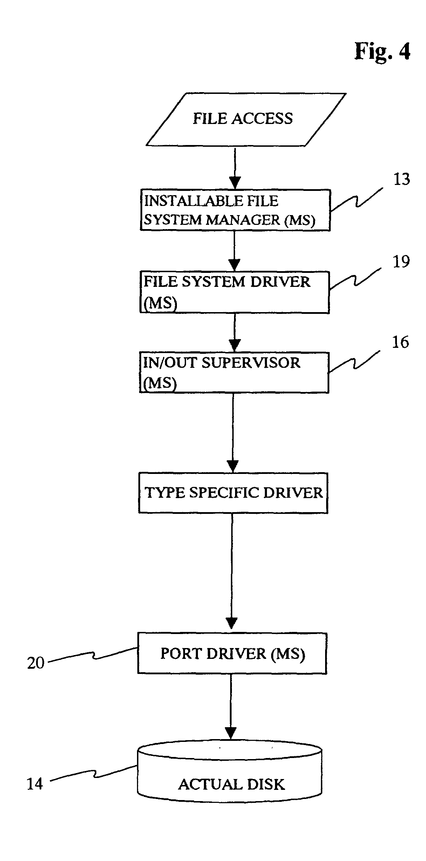

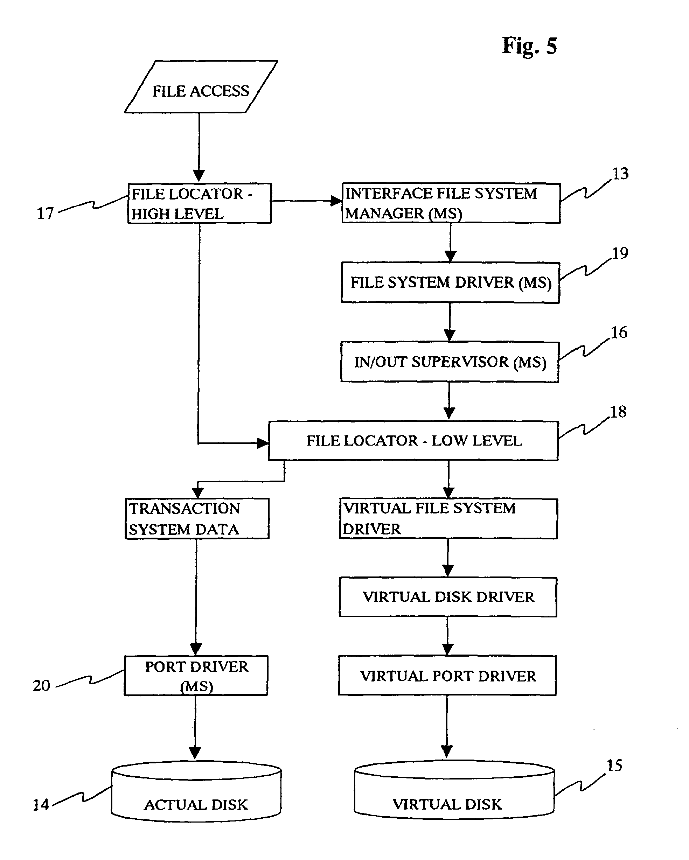

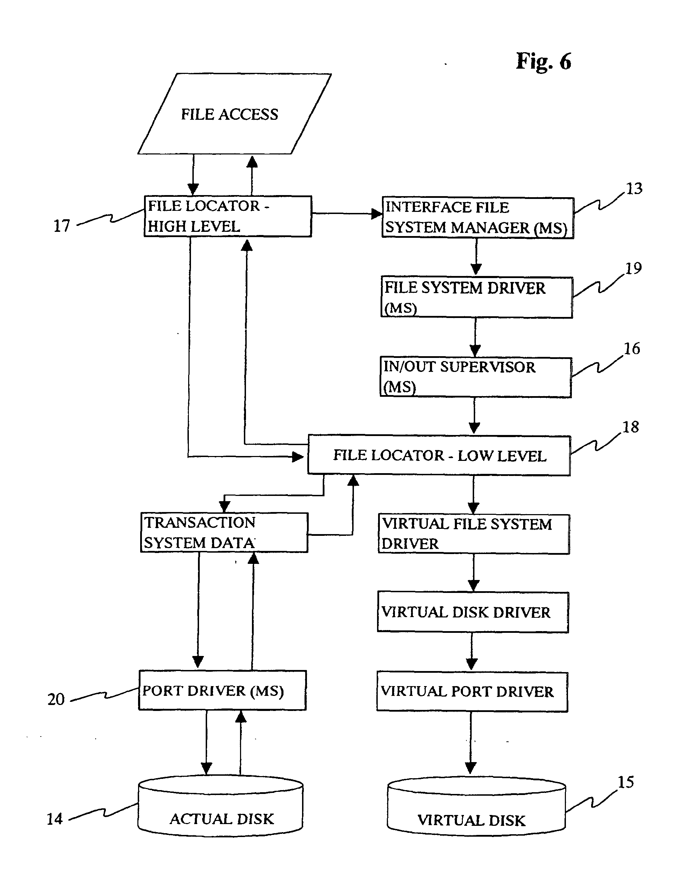

FIG. 4 shows a flow of a normal processing, and FIG. 5 shows a flow at the time of write in the virtual drive. FIG. 6 shows a flow of processing at the time of read in the virtual drive. (The same softwares in the drawings are indicated by the same reference numerals also in FIGS. 3, 4, 5, and 6.)

When an access from the operating system or the application software to the file occurs, normally, processing delivered to an installable file system manager 13 is once done by way of a file locator high level 17. At that time, the file locator high level 17 distinguishes if an actual drive 14 or a virtual drive 15. If it is the actual drive, processing of a flow for carrying out normal processing as shown in FIG. 2 is carried out, and in case where distinction is made of the virtual drive to select the read processing, reading is carried out from the normal drive as shown in FIG. 4. In case of the write processing, processing as shown in FIG. 3 is carried out. That is, an address accessed at the time of write is that after an address obtained by instructing an access to the virtual drive has been obtained, only the record of the file attribute is held on the main memory, and actual writing to the disk drive is not carried out.

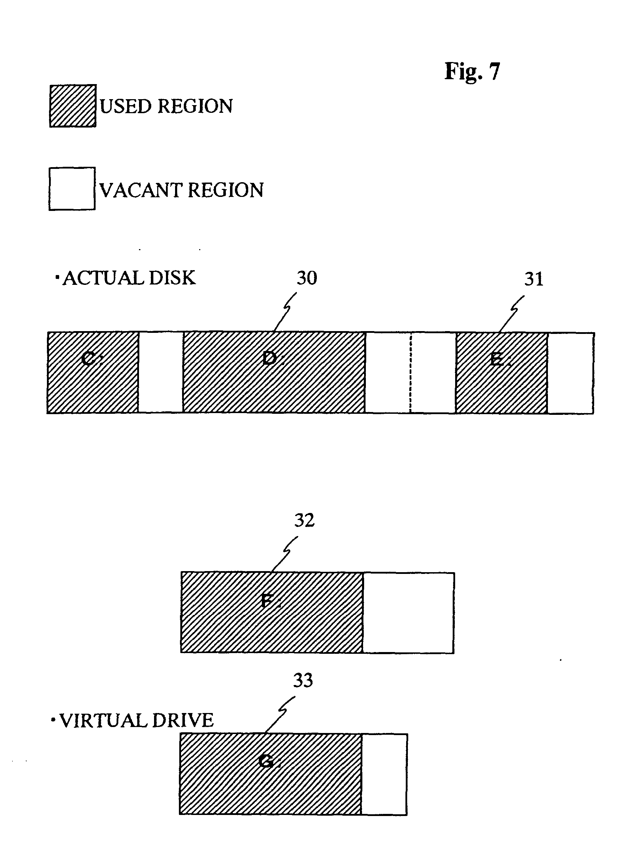

FIG. 7 is a view showing a file for explaining the conditions of write and read.

In FIG. 7, assuming the case where a D30 drive is reproduced, D30 secures a region immediately before E31. The diagonal portion indicates a used region, and portion without line indicates a vacant region. Where D30 drive is copied, in access to F, the virtual device driver reads read from D30, and write is replaced by renewal of a sector position to virtual driver information, and actual writing is not carried out. F is a purely technical procedure for deciding a sector. position, or providing an indirect access to a file protected in access. All data of D30 drive are copied virtually in G33 of a virtual drive produced at a newly designated position.

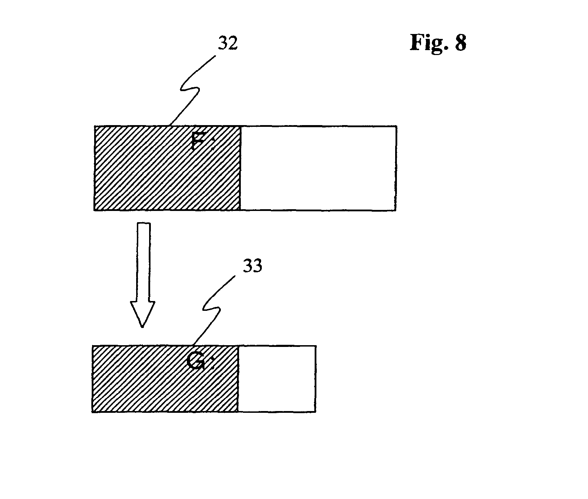

FIG. 8 is a view showing the conditions of a copy of the drive. Normal copying is executed from F32 (actually, D30) to G33 to generate both file accesses of high level and low level. Interruption into both the accesses is made to specify a position in sector unit. More specifically, the access to the virtual drive is totally replaced with the access to the actual drive by a function called the file locators 17, 18 constituting part of the present invention. The file locators 17, 18 are mounted by standard interrupting processing to the operating system, and processing is interrupted into both the high level interface and low level interface to the file provided by the operating system. At the time of read, first, this function replaces the access to the files on all virtual drives with the access to the files on the actual drives corresponding thereto. Simultaneously, at the time of write to the virtual drive, actual writing is not carried out, but it is replaced with processing for obtaining write information at the low level. Its information is stored by the virtual device driver. That is, the read access of data from the virtual drive is replaced with the reading of data of a partition on the actual drive, via the virtual device driver mounted on the basis of the present invention, and writing is completed merely by the decision of a position on the virtual drive.

And, since an address that is produced by the operating system can be compared directly by both interruptions of high level and low level, an access to the disk instructed in file unit can be indexed in "Sector" unit. Thereby, analysis of the file system per se is not necessary unlike all the existing prior arts, but positions of all sectors belonging to a suitable file can be decided making use of a function of the operating system alone. By checking absolute positions of all sectors constituting all files on the partitions obtained as described above, a moved destination of the sector is decided, and regions secured on the main memory are stored in a corresponding table.

For deciding positions of all files on the partition of the subject, and for preventing the conflict between access rights of files in the Windows operating system, "Mirror" drive is prepared from the partition of the subject. The "Mirror" drive is easily prepared by newly preparing an entry of the same attribute value as the partition of the subject on a drive mount point of the Windows operating system.

However, since in this condition, not only contents are not present, but also no access can be achieved in any sense, a file system is produced in the operating system by "FDISK" command and "FORMAT' command which are standard commands with respect to the virtual drive. At this time, by applying the aforementioned file locators, reading is done from the corresponding actual drive, and writing is subjected to terminating processing merely by recording information by means of the device driver constituting the virtual drive "Without performing actual processing", whereby the operation of the external storage device maintained as a regular disk of the operating system becomes well-equipped.

Next, a virtual drive decided by each sector position on the external storage device of the subject is produced so that a "Target" drive is adjusted in position to the size of after resize, "FDISK and FORMAT' is carried out by a virtual device driver constituting file locators, and a file system is produced by a function of the operating system.

Then, copying of all files is virtually carried out on the target, from the mirror of the partition of the subject "Via the virtual device driver" constituting the file locators. The processing carried out at this time will be described in detail. After the file system on the mirror disk has been adequately put in order (Since a standard file system is of a unidirectional hierarchical graph construction not circulated, putting in order is enabled without fail.), copying of files is sequentially carried out via the virtual device with respect to the target disk in accordance with the order from the leading file.

Further, at the time of copying, the file on the mirror is taken apart into sectors which are constituent elements thereof, which are read by the file locators, and at the time of writing in the target, the file locators store information at a position to be written as information at a position of each sector on the target disk.

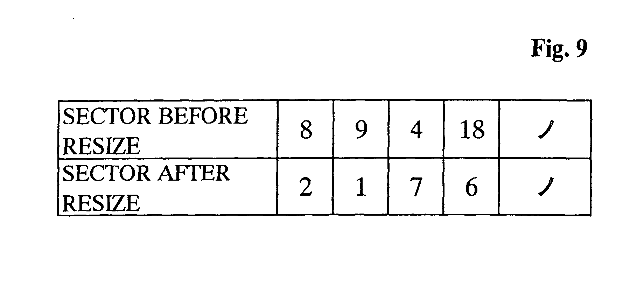

FIG. 9 shows an example of a corresponding table of positional information. After all orders have been fully finished up, the file locators produce, with respect to the sectors constituting all corresponding files on the mirror and the target, a corresponding table of new and old position information.

By this work, when the operating system carries out reading with respect to the target disk, the sector position information is returned by the file locators, and the file contents locate the sector on the mirror via the virtual device driver constituting the file locators, contents of which can be returned. As a result, with respect to all directories on the partition which is the subject of operation, the directory construction is copied, and with respect to the files, the attribute thereof as well as the position thereof are decided in sector unit (through the mirror), and the positions and sizes of all sectors on the target can be secured. When this work is finished, the target is filled with exactly the same files as the "Apparent" subject partition, and moreover, the partition is provided with the designated attribute. (However, all of them are only virtual files merely comprised of position, size and attribute, and the content as a file is to designate a file on the actual partition referring to files on the mirror through the file locators.)

A position every sector of the present file can be decided by "Read" and "Virtual write" accesses with respect to the subject partition according to the above-described procedure, and similarly, a position of a sector at the moved destination can be decided by the access to the target by way of the file locators.

Now, movement of the final sector will be explained.

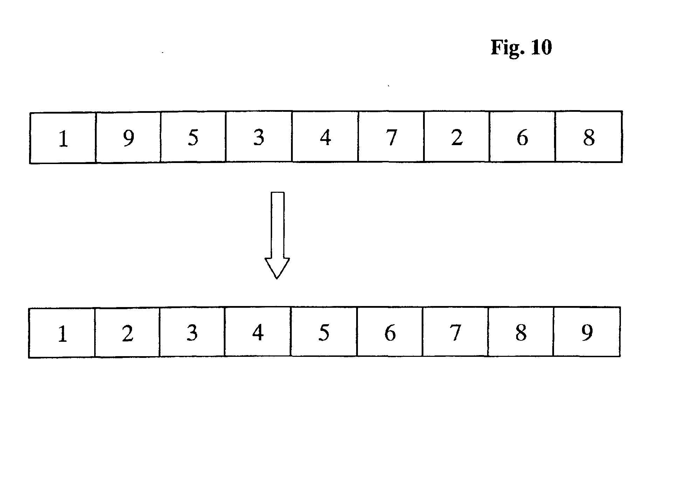

FIG. 10 is a view for explaining the conditions of a file copy. In FIG. 10, the upper stage shows the conditions in which files (It is assumed, for simplifying the explanation, that in the present embodiment, one file is present one sector.) are arranged on the actual partition 1, and the lower stags shows the conditions in which all files are virtually copied on the virtual drive newly prepared at the designated position. At this time, when all files and sectors are rearranged while being arranged on the virtual drive, the partition 1 will be the same as the virtual drive prepared newly, and the partition 1 is to be reorganized. The procedure used this time comprises: providing a work region on the main storage device, sequentially replacing sectors on the partition 1 while being present on the virtual drive, and moving and rearranging the entirety to the intended position.

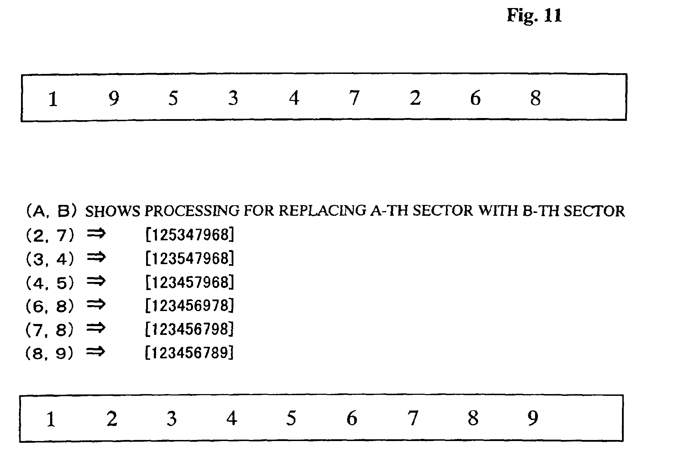

FIG. 11 is a view showing replacement of a sector on a partition. As shown in an example of this figure, replacement is executed in the following manner via the work region. This example shows processing for replacing the A sector with the B sector by (A, B).

In the final procedure, all sectors are moved to the positions on the corresponding target in accordance with the positions of the sectors so far obtained to complete reproduction of the partition.

In the movement in sector unit as described, the disk containing the partition which is the subject is locked by the function of the operating system to stop the secondary processing having accompanied the operating system. Then, development in terms of mounting incorporating a cache mechanism therein has been made so that the movement of sectors may be carried out quickly in accordance with the corresponding table. Further, this portion is noticeable in a portion which relies on the operating system and the hardware, and therefore adjustment being adjusted to various hardware platforms becomes enabled.

In the present invention, a plurality of techniques described below can be used jointly, which is important also in the present invention.

In mounting, all sector positions are held on the memory, and processing for movement of sectors can be carried out. Only necessary in this case is a table in which sectors to be moved and replaced which are obtained by comparing the mirror and the target are described. Accordingly, sectors may be replaced in order of this table. The procedure for preparing this table is carried out simultaneously with the copying processing to the target whereby omission of the procedure and saving of memory regions become enabled.

Further, the matter that should be particularly mentioned in respect of the mounting technique is that depending on the operating system which is the subject of the mounting, in case where the partition containing the file substance is operated, a group of files "Not moved to a suitable position" is present due to the limitation of mounting of the operating system. With respect to the "Exceptional" group of files, order of copying as "Preferential file" is artificially leveled up to move them in advance thereby enabling control - of the moved destination.

Further, in this case, in the actual device, since the positions of all sectors were held, there is a possibility that memory is wholly short, and various known high-speed algorithms that may be used to move sectors cannot be employed. In order to avoid this problem, it is possible that index files for all sectors are prepared on the actual partition along with the mirror and the target prior to copying, the index is renewed as copying progresses (the index itself is not moved during processing), and processing in file unit is replaced with the whole processing through the index to perform the whole processing at higher speed.

Furthermore, entries of the processed index are renewed in record in a fixed period (recording one by one is also possible) to enable preparing against the occurrence of external troubles such as a breakage of power supply.

In case of the one-by-one recording and renewal, since the point that should be restarted positively is known, it is possible to always restart processing from the point where trouble occurs unless a loss in terms of hardware occurs. However, on the other hand, since writing to the external storage device always occurs, lowering of processing speed to some extent is predicted.

On the other hand, in case of recording and renewal at fixed intervals, lowering of speed is reduced as compared with one-by-one renewal, but where whether or not sectors in a certain range are replaced cannot be distinguished, the corresponding file is possibly lost. It is noted that since indexes as viewed from the target are rearranged every file, the losses can be suppressed every file. If this is impossible, non-coordination as the file system occurs, and all may be lost. Also from a viewpoint of this, the present invention provides the sufficient safety measure.

In the reproduction of a partition, since the file system is reproduced by the operating system itself, a partition control function of high function can be realized while maintaining compatibility without developing a new system.

### INDUSTRIAL APPLICABILITY

To provide a software having a partition control function wherein when a partition already secured on the disk device of a computer being operated need be changed, a partition can be reproduced at a new position on the disk with new size and characteristic by the virtual drive technique while maintaining the contents thereof.

## Claims

1. A method for reproducing a partition using a virtual drive, in an
operating system for carrying out divisional control with a partition based on physical sectors in an external storage device as a unit, a virtual drive being prepared by the steps of:
changing said partition to a suitable size;
preparing the partition after changed as a new partition by the standard procedure provided in advance in said operating system;
deciding a new physical position of all data of said partition on the basis of preparing information of said new partition;
obtaining position information of a physical sector to be replaced on the basis of said new physical position to produce different information between original position information and new position information;
reproducing said partition on the basis of said produced different information; and
sequentially recording and renewing progress points of said reproducing processing, **characterized by** carrying out reproduction of the partition while maintaining the contents of the partition without relying on the internal construction of a file system.

2. The method for reproducing a partition using a virtual drive according to Claim 1, wherein said virtual drive is constituted including a target drive and a mirror drive.

3. The method for reproducing a partitions using a virtual drive according to Claim 2, wherein on said target drive are recorded the position and the size after changed from the position of the physical sector of the external storage device.

4. The method for reproducing a partition using a virtual drive according to Claim 2, wherein on said mirror drive is recorded the construction of the partition which is the subject of the reproduction.

5. The method for reproducing a partition using a virtual drive according to Claim 1, wherein said change can be set freely irrespective of the contents of said partition by preparing the size and the position of said partition in said virtual drive.

6. The method for reproducing a partition using a virtual drive
according to Claim 1, wherein said step for deciding a physical position of a partition comprises recording data of disk access by the operating system at the time of file access, and directly connecting a file and a sector which is a physical constituent element thereof to decide its physical position.

7. The method for reproducing a partition using a virtual drive
according to Claim 6, wherein said deciding of the physical position is carried out by a file locator while obtaining information of a position of the physical sector which is a minimum unit of a file from information of the operating system.

8. The method for reproducing a partition using a virtual drive
according to Claim 7, wherein said file locator obtains an address produced by the operating system by standard interruption of high level and low level to the operating system, which is compared with an address of an original sector to decide a position of a new sector.

9. The method for reproducing a partition using a virtual drive
according to Claim 7, wherein said file locator is constituted including a virtual device driver.

10. The method for reproducing a partition using a virtual drive
according to Claim 9, wherein said virtual device driver stores write information of low level obtained by said file locator.

11. The method for reproducing a partition using a virtual drive
according to Claim 7, wherein said virtual drive means is a virtual drive for producing the same data construction as the corresponding external storage device on the memory region to hold it, and selecting processes such as read and write to change operation.

12. The method for reproducing a partition using a virtual drive
according to Claim 11, wherein erasing of said virtual drive prepared is carried out separately as a processing independent of the file system.

13. The method for reproducing a partition using a virtual drive
according to Claim 1, wherein the virtual partition produced in said virtual drive is initialized without affecting on the corresponding actual data.

14. The method for reproducing a partition using a virtual drive
according to Claim 1, wherein production of the different information by way of said position information is produced from a corresponding relation between position information of a series of physical sectors to be relaced on the external storage device, an original position and position information of moved destination.

15. The method for reproducing a partition using a virtual drive
according to Claim 14, wherein the record of said corresponding relation is a corresponding table of the original position and position information after reproduced with respect to all sectors corresponding to each other recorded in said mirror drive and said target drive by said file locator.

16. The method for reproducing a partition using a virtual drive
according to Claim 15, wherein all files and sectors recorded on the partition are replaced in the conditions in which they are recorded in the virtual drive using said corresponding table to rearrange the sectors.

17. The method for reproducing a partition using a virtual drive
according to Claim 1, wherein the sequential recording and renewal of progress points in said processing are that entries of the processed index are recorded and renewed in a file one by one or in affixed period.

18. A data processing apparatus having an operating system provided
with a device for controlling access and change with respect to information stored in an external storage device of a computer system and for carrying out divisional control with a partition based on a physical sector as a unit in said external storage device, in a processing device in which reproduction of said partition is carried out by virtual drive means while maintaining the contents of said partition without relying on the internal construction of a file system, said device including:
means for changing said partition to a suitable size;
means for preparing said partition after changed as a new partition by the standard procedure provided in advance in said operating system;
means for deciding new physical positions of all data of said partition on the basis of preparation information of said new partition;
means for producing different information between original position information and new position information while obtaining position formation of the physical sector to be replaced on the basis of said new physical position; and
means for sequentially recording and renewing progress points of said reproduction processing, whereby having virtual drive means maintaining the contents of the partition and produced by the new partition.

19. The data processing apparatus according to Claim 18, wherein in a device for controlling access and change with respect to information stored in an external storage device of a computer system, said means for deciding a physical position of said partition records data of a disk access by the operating system at the time of file access, and directly connects a file and a sector which is a physical constituent element thereof to decide a physical position thereof.

20. The data processing apparatus according to Claim 18, wherein said virtual drive means is a virtual drive for producing the same data construction as the corresponding external storage device on the memory region to hold it, and selecting processes such as read and write to change operation.

21. A data storage apparatus having an operating system provided
with a device for controlling access and change with respect to information stored in an external storage device of a computer system and for carrying out divisional control with a partition based on a physical sector as a unit in said external storage device, said device comprising:
means for changing said partition to a suitable size;
means for preparing said partition after changed as a new partition by the standard procedure provided in advance in said operating system;
means for deciding new physical positions of all data of said partition on the basis of preparation information of said new partition;
means for producing different information between original position information and new position information while obtaining position formation of the physical sector to be replaced on the basis of said new physical position;
means for reproducing said partition on the basis of said produced different information; and
means for sequentially recording and renewing progress points of said reproduction processing, whereby having stored reproducing means of a partition using a virtual drive for carrying out reproduction of a new partition while maintaining the contents of the partition not relying on the internal construction of a file system.

22. The data storage apparatus according to Claim 21, wherein in a device for controlling access and change with respect to information stored in an external storage device of a computer system, said means for deciding a physical position of said partition records data of a disk access by the operating system at the time of file access, and directly connects a file and a sector which is a physical constituent element thereof to decide a physical position thereof.

23. The data storage apparatus according to Claim 21, wherein said virtual drive means of said device stores a virtual drive means for producing the same data construction as the corresponding external storage device on the memory region to hold it, and selecting processes such as read and write to change operation.
